# EUROPEAN PATENT APPLICATION

(11) **EP 4 332 606 A1**
(43) Date of publication of application: **06.03.2024**
(21) Application number: 22193049.8
(22) Date of filing: 31.08.2022
(51) Int. Cl.: G01S 3/02

(54) **METHOD, APPARATUS AND SYSTEM FOR DISPLAYING BEARINGS OF BANDWIDTHS AND THE CORRESPONDING AZIMUTHS**

(71) Applicant: Rohde & Schwarz GmbH & Co. KG, 81671 München (DE)
(72) Inventor: Wang, James, 486041 Singapore (SG); He, Jun, 486041 Singapore (SG); Sun, JianHua, 486041 Singapore (SG)
(74) Representative: Rupp, Christian

(57) **Abstract**

Method, apparatus and system for displaying bearings of bandwidths and the corresponding azimuths, wherein signals from spectrum monitoring of several bandwidths are derived, a bearing and an azimuth of the bearing for each bandwidth with wideband direction finding is obtained, for each signal it is determined if there is a bearing, it is visually discriminated between the signals with a bearing and the signals without a bearing, and the signals with a bearing are displayed together with the corresponding azimuth and the signals without a bearing on a graphical user interface.

## Description

Method, apparatus and system for displaying bearings of bandwidths and the corresponding azimuths comprising deriving signals from spectrum monitoring of several bandwidths, obtaining a bearing and an azimuth of the bearing for each bandwidth with wideband direction finding and determining for each signal if there is a bearing.

Radio communications have become an integral part of our modern civilization. In addition to the increasing number of human users of wireless technology, there is also major growth in devices and machines that exchange data via radio waves. Driven by technological advances and the growing popularity of new products, the demand for additional frequency spectrum is expanding. However, frequency spectrum represents a limited natural resource, making it critical to ensure intelligent planning of frequency usage along with rational allocation schemes and efficient monitoring techniques. Besides the exponential growth in radio services, new signal types are necessitating further advances in spectrum monitoring.

In this general field of spectrum monitoring, radio direction finders are widely used to locate transmitters such as radio frequency interferers and unlicensed broadcasting stations. One possibility of radio direction finding can be for example wideband direction finding. Spectrum monitoring and wideband direction finding allows simultaneous monitoring and direction finding of each bandwidth within the real time span. Wideband direction finder can support thousands of bandwidths within the real time span and produce one bearing for each bandwidth. Wideband direction finding enables users to simultaneously monitor many signals within the larger real time frequency span.

A problem with such wideband direction finding, however, arises since there is a huge number of bandwidths and bearings (e.g. 1600). For each bearing, the azimuth may vary between 0 and 360 degrees. Also, the signals, bandwidths and bearings may change over time. Analyzing these huge amounts of information to monitor spectrum, identify direction of the signal emitters and track the changing of the signal emitters direction are vital for user's spectrum monitoring and signal hunting.

For showing respectively displaying the signals, bandwidths and bearings, for example so called azimuth panels are known, which map the frequency and the azimuth to the x and y axis. The last consecutive number (e.g. 50) of measurements are shown on the coordinate. Due to the large amount of data and azimuth randomness for noise signal, it is very difficult to spot the signal azimuth from the background noise azimuth, which becomes even worse for narrower banded signals.

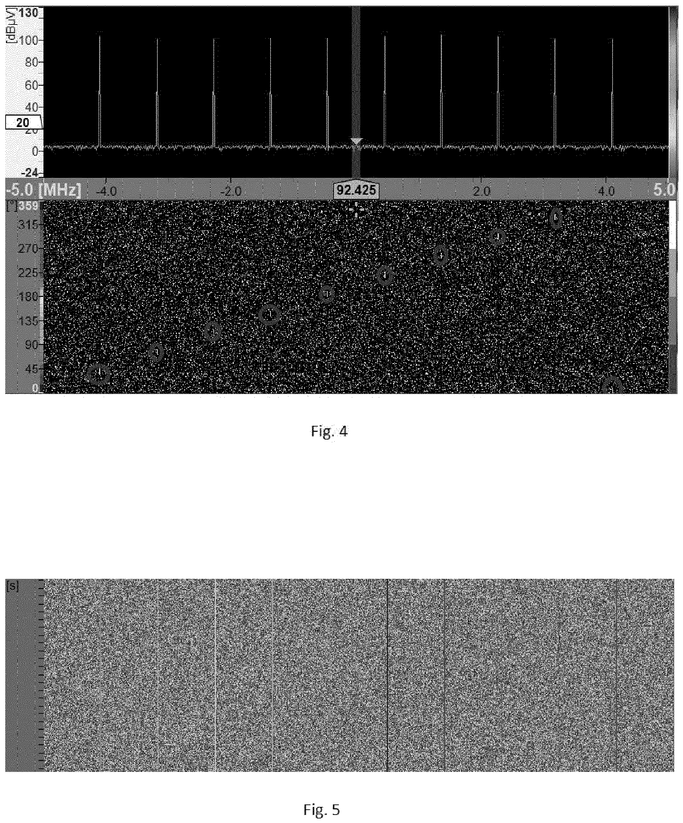

Such an azimuth panel is for example shown in Fig. 4 in the lower half, wherein the upper half of Fig. 4 shows generally, at which frequencies respectively bandwidths bearings of for example signal emitters can be found, without displaying at which azimuth in the corresponding bandwidth the bearing of a signal emitter can be found. The azimuth panel in the lower half of Fig. 4 shows the bearings at the corresponding bandwidth and additionally also displays the corresponding azimuth of each bearing at each bandwidth. As can be seen from the lower half of Fig. 4, however, it is very difficult to spot each bearing and the corresponding signal azimuth from the background noise.

Another way of presenting the results of the spectrum monitoring and wideband direction finding is to use waterfall panels, which map the frequency and the time to the x and y axis and map the azimuth to different colors. Again, however, due to the azimuth randomness for noise and narrow-banded signals, it is not easy to spot the signals azimuth from background noise azimuth.

In Fig. 5, such a waterfall panel is shown, wherein, similar as in Fig. 4, on the x axis the frequency is mapped. The colored vertical lines then represent a bearing and the corresponding bandwidth, wherein the color represents the azimuth of this bearing. Again, similar to the azimuth panel shown in Fig. 4, it is quite difficult to spot the bearing and the corresponding azimuth due to the background noise.

It is therefore an object of the present invention to improve efficiency to monitor spectrum, analyze direction of signals and track movement of a signal emitter or signal emitters.

This object is achieved by means of the features of the independent claims. The independent claims further develop the central idea of the present invention.

The present invention relates to a method and an apparatus for displaying bearings of bandwidths and the corresponding azimuths, wherein signals from spectrum monitoring of several bandwidths are derived, a bearing and an azimuth of the bearing is obtained for each bandwidth with wideband direction finding, for each signal it is determined if there is a bearing, it is visually discriminated between the signals with a bearing and the signals without a bearing, and the signals with a bearing are displayed together with the corresponding azimuth and the signals without a bearing on a graphical user interface (GUI).

In a preferred embodiment, the visually discriminating between the signals with a bearing and the signals without a bearing can comprises increasing values for displaying the signals with a bearing, wherein the increasing values for displaying the signals with a bearing can further comprise estimating a quality metric for each of the signals with a bearing, wherein the quality metric is used for highlighting the signal with a bearing and the corresponding azimuth when displaying the signals on the GUI. The quality metrics can be estimated using a signal-to-noise ratio of the signal, aggregation scores of past azimuth measurements or a charging and fading filter.

Advantageously, the increasing values for displaying the signals with a bearing can comprise increasing each of the values for displaying the signals with a bearing to a same value, or increasing the values for displaying the signals with a bearing based on a linear function, or increasing the values for displaying the signals with a bearing based on a non-linear function.

In a preferred embodiment, the visually discriminating between the signals with a bearing and the signals without a bearing can comprise decreasing values for displaying the signals without a bearing, wherein the decreasing values for displaying the signals without a bearing can further comprise decreasing each of the values for displaying the signals without a bearing to a same value, or decreasing the values for displaying the signals without a bearing based on a linear function, or decreasing the values for displaying the signals without a bearing based on a non-linear function.

The apparatus for displaying bearings of bandwidths and the corresponding azimuths, comprises a deriving unit, an obtaining unit, a determining unit, a discriminating unit and a displaying unit, wherein these units are configured to perform the corresponding steps.

Advantageously, the GUI is an azimuth panel, in which the frequency and the azimuth are mapped to the x and y axis, or the GUI is a waterfall panel, in which the frequency and the time are mapped to the x and y axis and the azimuth is mapped to different colours.

In a preferred embodiment, the apparatus further comprises the GUI. In another preferred embodiment, the GUI is positioned outside the apparatus and the apparatus further comprises a connection for connecting the GUI to the apparatus.

The present invention further relates to a system for displaying bearings of bandwidths and the corresponding azimuths, comprising an above described apparatus in which the GUI is positioned outside the apparatus and a GUI connected to the apparatus.

By deriving signals from spectrum monitoring of several bandwidths, obtaining a bearing and an azimuth of the bearing for each bandwidth with wideband direction finding, determining for each signal if there is a bearing, visually discriminating between the signals with a bearing and the signals without a bearing and displaying the signals with a bearing together with the corresponding azimuth and the signals without a bearing on a GUI, it is possible that the signals azimuth is labeled with quality and processed and presented based on quality, which significantly reduces users effort and improve efficiency to monitor spectrum, analyze direction of the signals and track movements of signal emitters.

These and other aspects and advantages of the present invention will become more apparent when studying the following detailed description, in connection with the figures in which:
- Fig. 1: shows a flow diagram of a method according to an embodiment of the present invention;
- Fig. 2: shows schematically an apparatus according to an embodiment of the present invention;
- Fig. 3: shows schematically an apparatus/a system according to an embodiment of the present invention;
- Fig. 4: shows an azimuth panel according to the prior art;
- Fig. 5: shows a waterfall panel according to the prior art; and
- Fig. 6: shows an azimuth panel and a waterfall panel according to the embodiment of the present invention.

As already described above, spectrum monitoring and wideband direction finding allows simultaneous monitoring and direction finding of each bandwidth within the real time span. A problem with such wideband direction finding, however, arises since there is a huge number of bandwidths and bearings, and thus, when displaying them it is very difficult to spot each bearing and the corresponding signal azimuth from the background noise.

In difference thereto, in the present invention a method, an apparatus and a system are provided for displaying bearings of bandwidths and the corresponding azimuths, wherein by using spectrum monitoring and wideband direction finding, a huge amount of signals in a huge amount of bandwidths are found and by the wideband direction finding a bearing and an azimuth of the bearing for each bandwidth will be obtained, wherein the signals with a bearing and the signals without a bearing are then visually discriminated and after that displayed on a GUI, wherein the signals with a bearing are displayed together with a corresponding azimuth.

From Fig. 4 lower part and Fig. 5, it is for example derivable that a huge amount of signals are measured by spectrum monitoring in different bandwidths respectively frequencies and by using wideband direction finding, for each bandwidth a bearing and an azimuth is obtained. The signals are signals of signal emitters and background noise, wherein most of the signals are background noise. To clearly determine where signal emitters are positioned, by using wideband direction finding, a bearing and an azimuth of the bearing for each bandwidth is obtained. In the present invention, it is then possible to determine where signal emitters are positioned, which also means that it is then possible to determine, which of the signals refer to a bearing (and thus to a signal emitter) and which of the signals represent background noise (and thus are without a bearing). The derived signals from the spectrum monitoring can therefore be distinguished between signals with a bearing and signals without a bearing, which allows the visually discrimination of the signals with a bearing and the signals without a bearing.

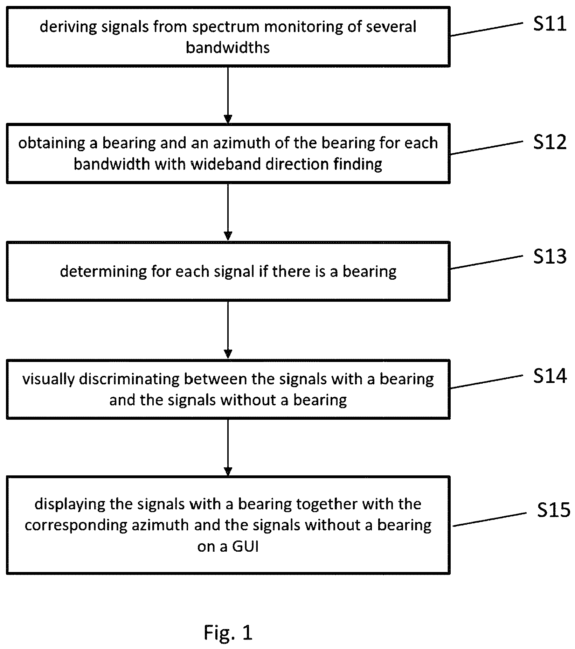

Fig. 1 shows a block diagram of a method for displaying bearings of bandwidths and the corresponding azimuths. In step S11 for several bandwidths, signals are derived from spectrum monitoring. As already mentioned above, a huge amount of signals are received or derived by spectrum monitoring, wherein the signals for example represent signals from signal emitters and also background noise. In addition, the method then further comprises step S12 wherein in this step a bearing and an azimuth of the bearing for each bandwidth is obtained from wideband direction finding. By this wideband direction finding, it can be determined respectively obtained from where signal emitters send signals and thus, the positions of such signal emitters can be obtained. Further, also the frequencies and bandwidths of each signal emitter and the corresponding azimuth can be obtained.

Further, in step S13, it is determined for each of the signals derived in step S11, if there is a bearing. By determining for each of the signals if there is a bearing and therefore also a corresponding azimuth to the bearing, it is possible that the derived signals in step S11 can be distinguished between signals with a bearing and signals without a bearing. Signals with a bearing are for example signals from a signal emitter source, whereas signals without a bearing can be for example background noise.

As already mentioned above, for each bandwidth one bearing is obtained, wherein for each bearing a corresponding azimuth is as well obtained by the wideband direction finding. That means that there is in each bandwidth respectively frequency a corresponding bearing with an azimuth, which represent for example a signal emitter.

It should be further noted that the steps S11 to S13 have not to be performed necessarily in the order as shown in Fig. 1. It would be for example also possible that these steps are all performed together in one step.

The method then further comprises in step S14 that the signals with a bearing and the signals without a bearing, which are both obtained from the steps S11 to S13, are visually discriminated. And after that visually discriminating in step S14, the method comprises in step S15 that the signals with a bearing and the signals without a bearing are displayed on a GUI, wherein the signals with a bearing are displayed together with the corresponding azimuths.

The visually discriminating in step S14 for example means that the values for displaying the signals with a bearing are increased and thus, the signals referring to a bearing are highlighted and shown in a more intensive way. Therefore, a user's effort is significantly reduced and efficiency to monitor spectrum, analyze direction of signals and track movements of signal emitters is improved. In particular, the finding of bearings on a displayed spectrum is improved, since the signals with the bearings and thus, the bearings are highlighted compared to the signals without a bearing. In addition, also the corresponding azimuths are displayed and therefore a user can easily derive the bearings and the corresponding azimuths on a displayed spectrum.

The step of increasing of values for displaying the signals with a bearing can be for example implemented by estimating a quality matrix for each of the signals with a bearing, wherein the quality matrix is used for highlighting the signal with a bearing and the corresponding azimuth when displaying the signals on the GUI. Thereby, the quality matrix can be estimated using a signal-to-noise ratio of the signal, aggregation scores of past azimuth measurements or a charging and fading filter.

Further, the step of increasing values for displaying the signals with a bearing means that each of the values for displaying the signals with a bearing is increased to a same value. Alternatively, the values for displaying the signals with a bearing are increased based on a linear function or a non-linear function.

Increasing each of the values for displaying the signals with a bearing to a same value means that independently of the exact value of the signal with a bearing, the value is for example increased to a higher, for example predefined value and thus, each of the signals with a bearing are displayed in a same highlighted way.

In difference thereto, when increasing the values for displaying the signals with a bearing based on a linear function or a non-linear function, it means that depending on the exact value of the corresponding signal it is increased for example when using a linear function in such a way that the values have still the same differences between each other, but on a higher level. In difference thereto, when using a non-linear function, a non-linear function can for example be used that increases the lower values more than the higher values and thus, all the values are increased but the lower increased values are closer to the higher increased values after the increasing step.

It would be also possible that instead of increasing the values for displaying the signals with a bearing, the visually discriminating step discloses a decreasing step of values for displaying the signals without a bearing. In this case, the signals with a bearing are kept and the corresponding values are displayed without changing them and instead, the values for displaying the signals without a bearing are decreased and thus the signals without a bearing are attenuated and thus, when displaying the attenuated signals respectively values of the signals without a bearing, the values respectively signals with a bearing and the corresponding azimuth are much easier to locate for a user on a display.

The step of decreasing values for displaying the signals without a bearing means that each of the values for displaying the signals without a bearing is decreased to a same value. Alternatively, the values for displaying the signals without a bearing are decreased based on a linear function or a non-linear function.

Decreasing each of the values for displaying the signals without a bearing to a same value means that independently of the exact value of the signal without a bearing, the value is for example decreased to a lower, predefined value and thus, each of the signals without a bearing are displayed in a same attenuated way.

In difference thereto, when decreasing the values for displaying the signals without a bearing based on a linear function or a non-linear function, it means that depending on the exact value of the corresponding signal it is decreased for example when using a linear function in such a way that the values have still the same differences between each other, but on a lower level. In difference thereto, when using a non-linear function, a non-linear function can for example be used that decreases the higher values more than the lower values and thus, all the values are decreased but the higher decreased values are closer to the lower decreased values after the decreasing step.

Further, it should be noted that in the visually discriminating step it would be also possible that the values for displaying the signals with a bearing are increased and additionally the values for displaying the signals without a bearing are decreased. That means that the above described increasing and the above described decreasing are combined and therefore the differences for showing and displaying the signals with a bearing and the signals without a bearing are even higher and thus a user can even more easily find the signals with a bearing respectively the bearing and the corresponding azimuth.

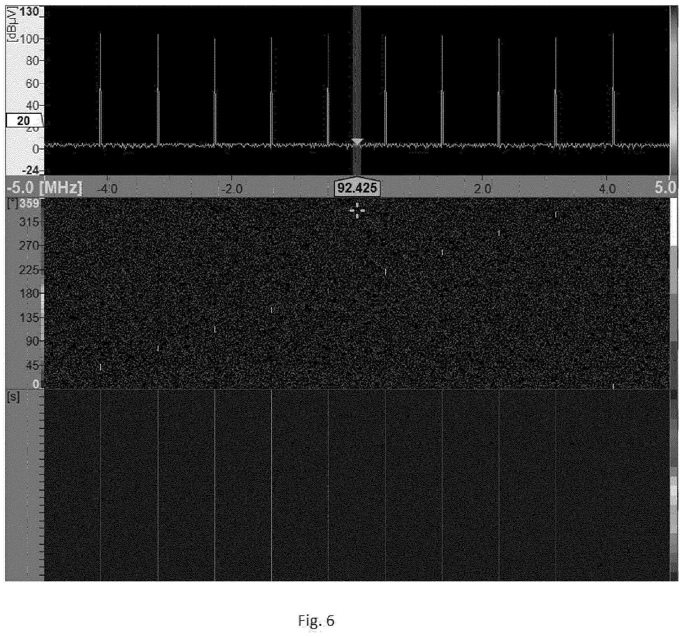

In Fig. 6 it is now again shown in the upper part where exactly bearings can be found in frequency, similar to the disclosure in the upper half of Fig. 4. In the middle and the lower part of Fig. 6, an azimuth panel and a waterfall panel are shown, wherein in both cases the present invention is applied. In the middle part of Fig. 6, the azimuth panel is shown, wherein it is clearly derivable that the signals with a bearing respectively the bearings are visually discriminated from the signals without a bearing. Thus, when the middle part of Fig. 6 is compared with the lower part of Fig. 4, it is clearly derivable that a user can much more easily find the bearings and the corresponding azimuths. As described above, this can be reached by either increasing the signals with a bearing or decreasing the signals without a bearing or both.

The lower part of Fig. 6 then shows a waterfall panel, similar to the one shown in Fig. 5. In difference to Fig. 5, however, the signals without a bearing are visually discriminated from the signals with a bearing and thus, again, the efficiency to monitor spectrum, analyze direction of signals and track movement of the signal emitters can be improved.

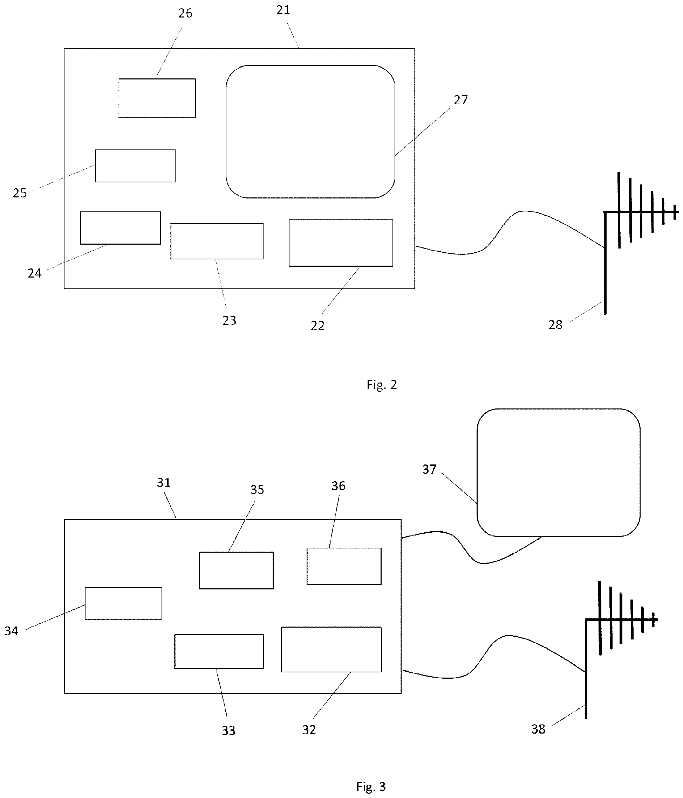

The Figs. 2 and 3 then further show an apparatus respectively system for displaying bearings of bandwidths and the corresponding azimuths, wherein in Fig. 2 an apparatus 21 is shown that comprises a deriving unit 22 for deriving signals from spectrum monitoring of several bandwidths, a obtaining unit 23 for obtaining a bearing and an azimuth of the bearing for each bandwidth with wideband direction finding, a determining unit 24 for determining for each signal if there is a bearing, a discriminating unit 25 for visually discriminating between the signals with a bearing and the signals without a bearing, a displaying unit 26 for displaying the signals with a bearing together with the corresponding azimuth and the signals without a bearing on a GUI and a GUI 27. The apparatus 21 can then be further connected to an antenna 28, for example a wideband direction finding antenna.

Regarding the detailed implementations of the different units in the apparatus 21, it is referred to the detailed description above to the method shown in Fig. 1.

Further, it should be noted that the GUI 27 can be for example a display or a monitor or another device, which can display a corresponding spectrum. The GUI 27 can be the waterfall panel or the azimuth panel as shown in the Figs. 4, 5 and 6.

Regarding the GUI when the GUI is an azimuth panel, the frequency and the azimuth are mapped to x and y axis, whereas in case the GUI is a waterfall panel, the frequency and the time are mapped to the x and y axis and the azimuth is mapped to different colors.

Further, it should be noted that in Fig. 2 the GUI 27 is placed inside the apparatus 21. Alternatively, it would be also possible that the GUI is outside the apparatus wherein the apparatus then comprises a connection for connecting the GUI to the apparatus. Such an apparatus 31 is shown in Fig. 3, wherein this apparatus 31 also comprises a deriving unit 32, a obtaining unit 33, a determining unit 34, a discriminating unit 35 and a displaying unit 36, wherein the units 32, 33, 34, 35 and 36 are similar to the units 22, 23, 24, 25 and 26. In addition, the apparatus 31 is connected to an antenna 38, which is similar to the antenna 28. In difference to Fig. 2, in Fig. 3 the apparatus 31 does not comprise a GUI. Instead, the apparatus 31 comprises a connection for connecting a GUI 37 to the apparatus 31. The GUI 37 is then placed outside the apparatus 31, wherein a system for displaying bearings of bandwidths and the corresponding azimuths comprises the apparatus 31 and the GUI 37.

By the present invention, the signals with a bearing are discriminated from the signals without a bearing, and thus the signals azimuth is labeled with quality and processed and presented based on quality, which means that the user's efforts are significantly reduced and the efficiency to monitor spectrum, analyze direction of signals and track movement of the signal emitters are improved. It is therefore possible to analyze huge amounts of information of spectrum monitoring, identify directions of the signals emitters, and track the changing of the signal emitters direction when spectrum monitoring and signal hunting is performed.

## Claims

1. A method for displaying bearings of bandwidths and the corresponding azimuths, comprising:
- deriving (S11) signals from spectrum monitoring of several bandwidths;
- obtaining (S12) a bearing and an azimuth of the bearing for each bandwidth with wideband direction finding;
- determining (S13) for each signal if there is a bearing;
- visually discriminating (S14) between the signals with a bearing and the signals without a bearing; and
- displaying (S15) the signals with a bearing together with the corresponding azimuth and the signals without a bearing on a graphical user interface, GUI.

2. The method of claim 1,
wherein visually discriminating (14) between the signals with a bearing and the signals without a bearing comprises:
- increasing values for displaying the signals with a bearing.

3. The method of claim 2,
wherein increasing values for displaying the signals with a bearing comprises:
- estimating a quality metric for each of the signals with a bearing, wherein the quality metric is used for highlighting the signal with a bearing and the corresponding azimuth when displaying the signals on the GUI.

4. The method of claim 3,
wherein the quality metrics are estimated using a signal-to-noise ratio, SNR, of the signal, aggregation scores of past azimuth measurements or a charging and fading filter.

5. The method of any of the claims 2-4,
wherein increasing values for displaying the signals with a bearing comprises:
- increasing each of the values for displaying the signals with a bearing to a same value.

6. The method of any of the claims 2-4,
wherein increasing values for displaying the signals with a bearing comprises:
- increasing the values for displaying the signals with a bearing based on a linear function; or
- increasing the values for displaying the signals with a bearing based on a non-linear function.

7. The method of any one of the claims 1-6,
wherein visually discriminating (S14) between the signals with a bearing and the signals without a bearing comprises:
- decreasing values for displaying the signals without a bearing.

8. The method of claim 7,
wherein decreasing values for displaying the signals without a bearing comprises:
- decreasing each of the values for displaying the signals without a bearing to a same value.

9. The method of claim 7,
wherein decreasing values for displaying the signals without a bearing comprises:
- decreasing the values for displaying the signals without a bearing based on a linear function; or
- decreasing the values for displaying the signals without a bearing based on a non-linear function.

10. An apparatus (21, 31) for displaying bearings of bandwidths and the corresponding azimuths, comprising a deriving unit (22, 32), an obtaining unit (23, 33), a determining unit (24, 34), a discriminating unit (25, 35) and a displaying unit (26, 36), wherein
- deriving unit (22, 32) is configured to derive signals from spectrum monitoring of several bandwidths;
- the obtaining unit (23, 33) is configured to obtain a bearing and an azimuth of the bearing for each bandwidth with wideband direction finding;
- the determining unit (24, 34) is configured to determine for each signal if there is a bearing;
- the discriminating unit (25, 35) is configured to visually discriminate between the signals with a bearing and the signals without a bearing; and
- the displaying unit (26, 36) is configured to display the signals with a bearing together with the corresponding azimuth and the signals without a bearing on a graphical user interface, GUI (27, 37).

11. The apparatus of claim 10,
wherein the GUI (27, 37) is an azimuth panel, in which the frequency and the azimuth are mapped to the x and y axis.

12. The apparatus of claim 10,
wherein the GUI (27, 37) is a waterfall panel, in which the frequency and the time are mapped to the x and y axis and the azimuth is mapped to different colours.

13. The apparatus of any of the claims 10-12,
wherein the apparatus (21) further comprises the GUI (27).

14. The apparatus of any of the claims 10-12,
wherein the GUI (37) is positioned outside the apparatus (31) and the apparatus (31) further comprises a connection for connecting the GUI (37) to the apparatus.

15. A system for displaying bearings of bandwidths and the corresponding azimuths, comprising an apparatus (31) according to claim 14 and a GUI (37) connected to the apparatus.
